# EUROPEAN PATENT APPLICATION

(11) **EP 4 664 541 A1**
(43) Date of publication of application: **17.12.2025**
(21) Application number: 23931514.6
(22) Date of filing: 07.04.2023
(51) Int. Cl.: H01M 4/131, H01M 4/62

(54) **BATTERY, MANUFACTURING METHOD, AND ELECTRICAL APPARATUS**

(71) Applicant: Contemporary Amperex Technology Co., Limited, Ningde, Fujian 352100 (CN)
(72) Inventor: LING, Yangfang, Ningde, Fujian 352100 (CN); LI, Xuan, Ningde, Fujian 352100 (CN); YIN, Ziyi, Ningde, Fujian 352100 (CN); SUN, Xin, Ningde, Fujian 352100 (CN); YE, Yonghuang, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/086962
(87) International publication number: WO 2024/207453

(57) **Abstract**

The present application provides a battery, comprising electrode sheets, wherein each electrode sheet comprises a current collector, a first active layer, and a second active layer; the first active layer is located on at least one surface of the current collector; the second active layer is located on the surface of the first active layer away from the current collector; the first active layer and the second active layer each comprise an active substance and a gel electrolyte; the first active layer further comprises a swelling electrolyte provided with pores; part of the gel electrolyte in the first active layer is filled in the pores of the swelling electrolyte.

## Description

### TECHNICAL FIELD

The present application relates to the field of batteries, and in particular, to a battery, a preparation method, and an electric device.

### BACKGROUND

The statements herein merely provide background information related to the present application and do not necessarily constitute prior art.

With the continuous increase of the energy density of batteries, the safety performance of batteries is also facing greater challenges. In the improvement of batteries, gel batteries have relatively good safety performance. However, the cycle performance of conventional gel batteries needs to be further improved.

### SUMMARY

In order to achieve the above objective, the present application provides a battery, including an electrode plate, where the electrode plate includes a current collector, a first active layer, and a second active layer, where the first active layer is located on at least one surface of the current collector, the second active layer is located on a surface of the first active layer distal to the current collector, and the first active layer and the second active layer both include an active substance and a gel electrolyte; the first active layer further includes a swelling electrolyte having pores, and a part of the gel electrolyte in the first active layer is filled in the pores of the swelling electrolyte.

In the battery described above, by introducing the swelling electrolyte, more gel electrolyte may be located in the first active layer proximal to the current collector, which is conducive to promoting the intercalation and/or deintercalation of lithium ions in the electrode plate, such that the cycle performance of the gel battery may be improved.

In some embodiments, morphology of the swelling electrolyte is at least one of spherical and spheroidal.

In some embodiments, an average particle size of the swelling electrolyte is 210-850 nm.

In some embodiments, an average particle size of the swelling electrolyte is 300-500 nm.

In some embodiments, a weight-average molecular weight of the swelling electrolyte is 2000-10,000.

In some embodiments, a weight-average molecular weight of the swelling electrolyte is 3000-8000.

In some embodiments, the swelling electrolyte includes at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

In some embodiments, a mass percentage of the swelling electrolyte in the first active layer is 0.01%-5%.

In some embodiments, a mass percentage of the swelling electrolyte in the first active layer is 1%-4%.

In some embodiments, the gel electrolyte is of a mesh structure inside the electrode plate.

In some embodiments, the first active layer includes a plurality of active sublayers arranged in a stacked manner, where each of the active sublayers includes the active substance, the gel electrolyte, and the swelling electrolyte, the swelling electrolyte in each of the active sublayers is uniformly distributed, and the mass percentage of the swelling electrolyte in the adjacent active sublayer gradually decreases in a direction away from the current collector.

In some embodiments, the mass percentage of the swelling electrolyte in the adjacent active sublayer decreases by 0.01%-1% in the direction away from the current collector.

In some embodiments, the mass percentage of the swelling electrolyte in the active sublayer most proximal to the current collector is 3%-5%.

In some embodiments, the mass percentage of the swelling electrolyte in the active sublayer most distal to the current collector is 0.01%-3%.

In some embodiments, a thickness of each of the active sublayers is 20-120 µm.

In some embodiments, the gel electrolytes in the active sublayers are of an integrated structure.

In some embodiments, a mass percentage of a swelling electrolyte in the second active layer is ≤ 0.5%.

In some embodiments, a mass percentage of a swelling electrolyte in the second active layer is ≤ 0.05%.

In some embodiments, a mass percentage of a swelling electrolyte in the second active layer is 0.

In some embodiments, a thickness of the second active layer is ≥ 10 µm.

In some embodiments, a thickness of the second active layer is 10-180 µm.

In some embodiments, the gel electrolyte in the second active layer and the gel electrolyte in the first active layer are of an integrated structure.

In some embodiments, a thickness of the first active layer is 70-240 µm.

In some embodiments, the battery further includes a gel electrolyte layer, where the gel electrolyte layer is located on a surface of at least one of a positive electrode plate, a negative electrode plate, and a separator of the battery, and when the positive electrode plate and/or the negative electrode plate is provided with the first active layer and the second active layer, the gel electrolyte layer is located at least on a surface of the second active layer.

In some embodiments, a thickness of the gel electrolyte layer is 0.5-4 µm.

In some embodiments, the electrode plate includes at least one of the positive electrode plate and the negative electrode plate.

The present application further provides a preparation method for a battery, including the following steps:
forming a first prefabricated active layer on at least one surface of a current collector, where the first prefabricated active layer includes a swelling electrolyte raw material and an active substance, and forming a second prefabricated active layer on the first prefabricated active layer, where the second prefabricated active layer includes the active substance, such that a prefabricated electrode plate is prepared;
assembling battery assemblies including the prefabricated electrode plate into a battery cell;
injecting a gel electrolyte solution into the battery cell, such that the gel electrolyte solution infiltrates the active substances, and the swelling electrolyte raw material absorbs the gel electrolyte solution and swells; and
curing the gel electrolyte solution to form a swelling electrolyte having pores, where the pores of the swelling electrolyte are filled with a gel electrolyte.

In some embodiments, morphology of the swelling electrolyte raw material is at least one of spherical and spheroidal.

In some embodiments, a particle size of the swelling electrolyte raw material is smaller than a particle size of the swelling electrolyte.

In some embodiments, an average particle size of the swelling electrolyte raw material is 200-800 nm.

In some embodiments, an average particle size of the swelling electrolyte raw material is 300-500 nm.

In some embodiments, a weight-average molecular weight of the swelling electrolyte raw material is 2000-10,000.

In some embodiments, a weight-average molecular weight of the swelling electrolyte raw material is 3000-8000.

In some embodiments, the swelling electrolyte raw material includes at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

In some embodiments, forming the first prefabricated active layer on at least one surface of the current collector includes:
sequentially forming a plurality of prefabricated active sublayers arranged in a stacked manner on at least one surface of the current collector, where each of the prefabricated active sublayers includes the active substance and the swelling electrolyte raw material, and controlling a mass percentage of the swelling electrolyte raw material in each of the prefabricated active sublayers to gradually decrease in a direction away from the current collector.

In some embodiments, the mass percentage of the swelling electrolyte raw material in the adjacent prefabricated active sublayer is controlled to decrease by 0.01%-1% in the direction away from the current collector.

In some embodiments, the mass percentage of the swelling electrolyte raw material in the prefabricated active sublayer most proximal to the current collector is controlled to be 3%-5%.

In some embodiments, the mass percentage of the swelling electrolyte raw material in the prefabricated active sublayer most distal to the current collector is controlled to be 0.01%-3%.

In some embodiments, a thickness of each of the prefabricated active sublayers is controlled to be 20-120 µm.

In some embodiments, a mass percentage of a swelling electrolyte raw material in the second prefabricated active layer is ≤ 0.5%.

In some embodiments, a mass percentage of a swelling electrolyte raw material in the second prefabricated active layer is ≤ 0.05%.

In some embodiments, a mass percentage of a swelling electrolyte raw material in the second prefabricated active layer is 0.

In some embodiments, the gel electrolyte solution includes a polymerizable monomer, an initiator, an electrolyte salt, and a solvent.

In some embodiments, a temperature of the curing is 50-70 °C.

In some embodiments, a time of the curing is 10-30 h.

The present application further provides an electric device, including the battery or a battery prepared by the preparation method.

### BRIEF DESCRIPTION OF THE DRAWINGS

In order to more clearly illustrate the technical solutions of the present application, the drawings used in the present application will be briefly described below. Apparently, the drawings in the following description illustrate merely some embodiments of the present application, and those of ordinary skills in the art may still derive other drawings from these drawings without creative efforts.
FIG. 1 is a schematic diagram of a secondary battery according to one embodiment of the present application.
FIG. 2 is an exploded view of the secondary battery according to one embodiment of the present application shown in FIG. 1.
FIG. 3 is a schematic diagram of an electric device using a secondary battery as a power source according to one embodiment of the present application.

### Description of the reference numerals:

1, secondary battery; 11, housing; 12, electrode assembly; 13, top cover assembly; and 2, electric device.

To better describe and illustrate embodiments and/or examples of the inventions disclosed herein, reference may be made to one or more of the drawings. The additional details or examples used to describe the drawings should not be considered as limiting the scope of any one of the disclosed inventions, the presently described embodiments and/or examples, and the best modes of these inventions presently understood.

### DETAILED DESCRIPTION

To facilitate the understanding of the present application, a more comprehensive description of the present application will be given below with reference to the related drawings. Preferred embodiments of the present application are shown in the drawings. The present application may, however, be implemented in many different forms and is not limited to the embodiments described herein. Rather, the purpose of providing these embodiments is to make the understanding of the content disclosed in the present application more thorough and comprehensive.

Unless defined otherwise, all technical and scientific terms used herein have the same meaning as commonly understood by those skilled in the art to which the present application belongs. The terms used in the specification of the present application are only for the purpose of describing specific embodiments, and are not intended to limit the present application. The term "and/or" used herein includes any and all combinations of one or a plurality of related listed items.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true or present and B is false or absent; A is false or absent and B is true or present; or both A and B are true, or both A and B are present.

Unless otherwise specified, the terms used in the present application have the well-known meanings that are commonly understood by those skilled in the art. Unless otherwise specified, the values of the parameters mentioned in the present application can be measured by various test methods commonly used in the art. For example, the parameters can be measured according to the test methods given in the embodiments of the present application.

An embodiment of the present application provides a battery, where a positive electrode plate and/or a negative electrode plate of the battery includes a current collector, a first active layer, and a second active layer, where the first active layer is located on at least one surface of the current collector, the second active layer is located on a surface of the first active layer distal to the current collector, and the first active layer and the second active layer both include an active substance and a gel electrolyte; the first active layer further includes a swelling electrolyte having pores, and a part of the gel electrolyte in the first active layer is filled in the pores of the swelling electrolyte.

In conventional gel batteries, due to the addition of a polymerizable monomer and/or an initiator to an electrolytic solution, the viscosity of the electrolytic solution increases, making it difficult for the electrolytic solution to enter an electrode plate, such that the problem of poor cycle performance may occur. In the battery of this embodiment, by introducing the swelling electrolyte, more gel electrolyte may be located in the first active layer proximal to the current collector, which is conducive to promoting the intercalation and/or deintercalation of lithium ions in the electrode plate, such that the cycle performance of the gel battery may be improved.

It can be understood that the swelling electrolyte refers to an electrolyte that swells in volume after absorbing an electrolytic solution. Introducing the swelling electrolyte into the first active layer can promote the infiltration of the electrolytic solution into the first active layer during liquid injection, such that more electrolytic solution enters the first active layer. During subsequent curing of the electrolytic solution, more gel electrolyte is formed in the first active layer, thereby improving the cycle performance of the battery. Meanwhile, since the first active layer is provided with more gel electrolyte, the risk of a sharp decrease in the cycle life of the battery due to insufficient electrolyte in the inner layer of the electrode plate can be reduced, that is, the risk of a plummet in the cycle life of the battery due to insufficient electrolyte in the inner layer of the electrode plate can be reduced.

It can also be understood that the gel electrolyte is of a mesh structure inside the electrode plate, which facilitates the conduction of lithium ions.

In some embodiments, the morphology of the swelling electrolyte is at least one of spherical and spheroidal. Spherical and spheroidal swelling electrolytes can form a relatively regular swelling electrolyte structure, which is better adapted to the first active layer, thereby being conducive to maintaining the stability of the structure of the first active layer.

Optionally, a particle size of the swelling electrolyte is 210-850 nm. If the particle size of the swelling electrolyte is too large, it is not conducive to grading. Meanwhile, if the particle size of the swelling electrolyte is too large, the problem of damaging the pore structure of the electrode plate may occur. If the particle size of the swelling electrolyte is too small, the problem of poor dispersion uniformity of the swelling electrolyte in the electrode plate may occur, thereby causing defects inside the electrode plate. For example, when the particle size of the swelling electrolyte is too small, the too small particle size may increase the risk of particle agglomeration during the preparation of an electrode plate slurry, which leads to poor particle dispersion, thereby causing defects inside the prepared electrode plate. Optionally, the particle size of the swelling electrolyte is 250 nm, 300 nm, 400 nm, 500 nm, 600 nm, 700 nm, 800 nm, etc. Optionally, an average particle size of the swelling electrolyte is 300-500 nm.

In some embodiments, a weight-average molecular weight of the swelling electrolyte is 2000-10,000. Typically, the greater the molecular weight of the swelling electrolyte, the greater the corresponding particle size. When the molecular weight of the swelling electrolyte is within the range, the swelling electrolyte can correspond to an appropriate particle size, thereby further improving the cycle performance of the battery. For example, the weight-average molecular weight of the swelling electrolyte is 2000, 3000, 4000, 5000, 6000, 7000, 8000, 4000, or 10,000. Optionally, the weight-average molecular weight of the swelling electrolyte is 3000-8000.

As a selection example of the swelling electrolyte, the swelling electrolyte includes at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

When the first active layer includes the swelling electrolyte, the mass percentage of the swelling electrolyte in the first active layer is 0.01%-5%. If the mass percentage of the swelling electrolyte in the first active layer is too small, the improvement of the cycle performance of the battery is limited. If the mass percentage of the swelling electrolyte in the first active layer is too large, the mass percentage of the active substance may be reduced, such that the energy density of the electrode plate is reduced. Optionally, the mass percentage of the swelling electrolyte in the first active layer is 1%-4%. Further optionally, the mass percentage of the swelling electrolyte in the first active layer is 0.01%, 0.05%, 0.1%, 0.5%, 1%, 1.5%, 2%, 2.5%, 3%, 3.5%, 4%, 4.5%, 5%, etc.

In some embodiments, the first active layer includes a plurality of active sublayers arranged in a stacked manner. Each of the active sublayers includes an active substance, a gel electrolyte, and a swelling electrolyte. The swelling electrolyte in each of the active sublayers is uniformly distributed. The mass percentage of the swelling electrolyte in the adjacent active sublayer gradually decreases in the direction away from the current collector. In the first active layer, the mass percentage of the swelling electrolyte gradually decreases in the direction away from the current collector, such that the first active layer with a certain mass percentage difference of the swelling electrolyte can be formed, which enables more gel electrolyte to be maintained inside the first active layer, thereby further improving the cycle performance of the battery.

Optionally, the mass percentage of the swelling electrolyte in the adjacent active sublayer decreases by 0.01%-1% in the direction away from the current collector. In this case, a relatively stable transition can be formed, which facilitates maintaining a relatively stable structure inside the first active layer, thereby further improving the cycle performance of the battery. Further optionally, the mass percentage of the swelling electrolyte in the adjacent active sublayer decreases by 0.01%, 0.05%, 0.08%, 0.1%, 0.2%, 0.3%, 0.4%, 0.5%, 0.6%, 0.7%, 0.8%, 0.9%, 1%, etc., in the direction away from the current collector. Still further optionally, the mass percentage of the swelling electrolyte in the adjacent active sublayer decreases by 0.1%-1% in the direction away from the current collector.

As some examples of the mass percentage of the swelling electrolyte in the active sublayer, the mass percentage of the swelling electrolyte in the active sublayer most proximal to the current collector is 3%-5%. For example, the mass percentage of the swelling electrolyte in the active sublayer most proximal to the current collector is 3%, 3.2%, 3.5%, 3.8%, 4%, 4.2%, 4.5%, 4.8%, 5%, etc.

As some examples of the mass percentage of the swelling electrolyte in the active sublayer, the mass percentage of the swelling electrolyte in the active sublayer most distal to the current collector is 0.01%-3%. Optionally, the mass percentage of the swelling electrolyte in the active sublayer most distal to the current collector is 0.01%, 0.02%, 0.05%, 0.08%, 0.1%, 0.15%, 0.2%, 0.25%, 0.3%, 0.4%, 0.5%, 0.6%, 0.7%, 0.8%, 0.9%, 1%, 1.2%, 1.5%, 1.8%, 2%, 2.2%, 2.5%, 2.8%, 3%, etc.

In some embodiments, the thickness of each of the active sublayers is 20-120 µm. Optionally, the thickness of each of the active sublayers is 20 µm, 30 µm, 40 µm, 50 µm, 60 µm, 70 µm, 80 µm, 90 µm, 100 µm, 110 µm, 120 µm, etc. It can be understood that the thicknesses of the active sublayers may be equal or unequal.

In some embodiments, the gel electrolytes in the active sublayers are of an integrated structure. In this case, the gel electrolytes in the first active layer are in communication with each other to form a complete lithium ion transmission network, which is conducive to further improving the cycle performance of the battery.

In some embodiments, the mass percentage of the swelling electrolyte in the second active layer is ≤ 0.5%. Optionally, the mass percentage of the swelling electrolyte in the second active layer is ≤ 0.05%. Further optionally, the mass percentage of the swelling electrolyte in the second active layer is 0. The mass percentage of the swelling electrolyte in the second active layer is relatively small, which enables more gel electrolytes to be proximal to the current collector, such that the risk of a plummet in the cycle performance of the battery due to insufficient electrolyte inside the electrode plate can be reduced.

In some embodiments, the thickness of the second active layer is ≥10 µm. Optionally, the thickness of the second active layer is 10-180 µm. Further optionally, the thickness of the second active layer is 10 µm, 20 µm, 30 µm, 40 µm, 50 µm, 60 µm, 70 µm, 80 µm, 90 µm, 100 µm, 100 µm, 120 µm, 130 µm, 140 µm, 150 µm, 160 µm, 170 µm, 180 µm, etc.

In some embodiments, the gel electrolyte in the second active layer and the gel electrolyte in the first active layer are of an integrated structure. In this case, the gel electrolyte in the second active layer and the gel electrolytes in the first active layer are in communication with each other, which is conducive to forming a complete lithium ion transmission network inside the electrode plate, thereby further improving the cycle performance of the battery.

In some embodiments, the thickness of the first active layer is 70-240 µm. Optionally, the thickness of the first active layer is 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, etc.

In some embodiments, the battery further includes a gel electrolyte layer. The gel electrolyte layer is located on the surface of at least one of the positive electrode plate, the negative electrode plate, and the separator of the battery. When the positive electrode plate and/or the negative electrode plate is provided with the first active layer and the second active layer, the gel electrolyte layer is located at least on the surface of the second active layer. When the surface of at least one of the positive electrode plate, the negative electrode plate, and the separator of the battery is provided with the gel electrolyte layer, a more complete lithium ion transmission network can be formed inside the battery, thereby further improving the cycle performance of the battery. Optionally, the thickness of the gel electrolyte layer is 0.5-4 µm. Further optionally, the thickness of the gel electrolyte layer is 0.5 µm, 0.8 µm, 1 µm, 1.5 µm, 2 m, 2.5 µm, 3 µm, 3.5 µm, 4 µm, etc.

It can be understood that in some embodiments, the electrolyte inside the battery includes the gel electrolyte. It can also be understood that inside the battery, the space between the positive electrode plate, the negative electrode plate, and the separator is filled with the gel electrolyte.

It can be understood that the electrode plate includes at least one of the positive electrode plate and the negative electrode plate.

Another embodiment of the present application provides a preparation method for a battery. The preparation method for a battery includes the following steps: forming a first prefabricated active layer on at least one surface of a current collector, where the first prefabricated active layer includes a swelling electrolyte raw material and an active substance, and forming a second prefabricated active layer on the first prefabricated active layer, where the second prefabricated active layer includes an active substance, such that a prefabricated electrode plate is prepared; assembling battery assemblies including the prefabricated electrode plate into a battery cell; injecting a gel electrolyte solution into the battery cell, such that the gel electrolyte solution infiltrates the active substances, and the swelling electrolyte raw material absorbs the gel electrolyte solution and swells; and curing the gel electrolyte solution to form a swelling electrolyte having pores, where the pores of the swelling electrolyte are filled with a gel electrolyte.

In this embodiment, by introducing the swelling electrolyte raw material into the first prefabricated active layer, more gel electrolyte solution may be introduced into the first prefabricated active layer during liquid injection. When the gel electrolyte solution is cured, the gel electrolyte may be filled into the pores of the swelling electrolyte, such that more gel electrolyte enters the electrode plate, which is conducive to the intercalation and/or deintercalation of lithium ions in the electrode plate, thereby improving the cycle performance of the battery.

It can be understood that the first prefabricated active layer may be formed by slurry coating. When forming the first prefabricated active layer, the swelling electrolyte raw material may be mixed into a slurry, and then the first prefabricated active layer may be formed by coating at least one surface of the current collector with the slurry.

In some embodiments, the morphology of the swelling electrolyte raw material is at least one of spherical and spheroidal. Spherical and spheroidal swelling electrolytes can form a relatively regular swelling electrolyte structure, which is better adapted to the first active layer, thereby being conducive to maintaining the stability of the structure of the first active layer.

It can be understood that the particle size of the swelling electrolyte raw material is smaller than the particle size of the swelling electrolyte. The swelling electrolyte raw material swells after absorbing the gel electrolyte solution, which leads to an increase in volume, such that the particle size of the swelling electrolyte may be greater than the particle size of the swelling electrolyte raw material. Optionally, the particle size of the swelling electrolyte raw material is 200-800 nm. For example, the particle size of the swelling electrolyte raw material is 200 nm, 250 nm, 300 nm, 400 nm, 500 nm, 600 nm, 700 nm, 800 nm, etc. Optionally, the average particle size of the swelling electrolyte raw material is 300-500 nm.

In some embodiments, the weight-average molecular weight of the swelling electrolyte raw material is 2000-10,000. Typically, the greater the molecular weight of the swelling electrolyte raw material, the greater the corresponding particle size. When the molecular weight of the swelling electrolyte raw material is within the range, the swelling electrolyte raw material can correspond to an appropriate particle size, thereby further improving the cycle performance of the battery. For example, the weight-average molecular weight of the swelling electrolyte raw material is 2000, 3000, 4000, 5000, 6000, 7000, 8000, 4000, or 10,000. Optionally, the weight-average molecular weight of the swelling electrolyte raw material is 3000-8000.

As some optional examples of the swelling electrolyte raw material, the swelling electrolyte raw material includes at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

In some embodiments, forming the first prefabricated active layer on at least one surface of the current collector includes: sequentially forming a plurality of prefabricated active sublayers arranged in a stacked manner on at least one surface of the current collector, where each of the prefabricated active sublayers includes an active substance and a swelling electrolyte raw material, and controlling the mass percentage of the swelling electrolyte raw material in each of the prefabricated active sublayers to gradually decrease in the direction away from the current collector. In this case, a certain concentration difference of the swelling electrolyte raw material may be formed, which is conducive to driving the gel electrolyte solution to penetrate into the inner layer, thereby improving the infiltration effect, shortening the infiltration time, and enhancing the energy efficiency.

It can be understood that the plurality of prefabricated active sublayers arranged in a stacked manner may be sequentially formed by slurry coating. When each of the prefabricated active sublayers is formed, the swelling electrolyte raw material may be mixed into the slurry for forming each of the prefabricated active sublayers according to a corresponding mass percentage, and then a corresponding prefabricated active sublayer is formed by slurry coating.

In some embodiments, the mass percentage of the swelling electrolyte raw material in the adjacent prefabricated active sublayer is controlled to decrease by 0.01%-1% in the direction away from the current collector. Optionally, the mass percentage of the swelling electrolyte raw material in the adjacent prefabricated active sublayer is controlled to decrease by 0.01%, 0.05%, 0.08%, 0.1%, 0.2%, 0.3%, 0.4%, 0.5%, 0.6%, 0.7%, 0.8%, 0.9%, 1%, etc., in the direction away from the current collector. Further optionally, the mass percentage of the swelling electrolyte raw material in the adjacent prefabricated active sublayer is controlled to decrease by 0.1%-1% in the direction away from the current collector.

In some embodiments, the mass percentage of the swelling electrolyte raw material in the prefabricated active sublayer most proximal to the current collector is controlled to be 3%-5%. For example, the mass percentage of the swelling electrolyte raw material in the prefabricated active sublayer most proximal to the current collector is controlled to be 3%, 3.2%, 3.5%, 3.8%, 4%, 4.2%, 4.5%, 4.8%, 5%, etc.

In some embodiments, the mass percentage of the swelling electrolyte raw material in the prefabricated active sublayer most distal to the current collector is controlled to be 0.01%-3%. Optionally, the mass percentage of the swelling electrolyte raw material in the prefabricated active sublayer most distal to the current collector is controlled to be 0.01%, 0.02%, 0.05%, 0.08%, 0.1%, 0.15%, 0.2%, 0.25%, 0.3%, 0.4%, 0.5%, 0.6%, 0.7%, 0.8%, 0.9%, 1%, 1.2%, 1.5%, 1.8%, 2%, 2.2%, 2.5%, 2.8%, 3%, etc.

In some embodiments, the thickness of each of the prefabricated active sublayers is controlled to be 20-120 µm. Optionally, the thickness of each of the prefabricated active sublayers is controlled to be 20 µm, 30 µm, 40 µm, 50 µm, 60 µm, 70 µm, 80 µm, 90 µm, 100 µm, 110 µm, 120 µm, etc. It can be understood that the thicknesses of the prefabricated active sublayers may be controlled to be equal or unequal.

In some embodiments, the mass percentage of the swelling electrolyte raw material in the second prefabricated active layer is ≤ 0.5%. Optionally, the mass percentage of the swelling electrolyte raw material in the second prefabricated active layer is ≤ 0.05%. Optionally, the mass percentage of the swelling electrolyte in the second prefabricated active layer is 0. The mass percentage of the swelling electrolyte raw material in the second prefabricated active layer is relatively low, which can provide a buffer space for the infiltration of the gel electrolyte solution toward the inside of the electrode plate during liquid injection, promote the movement of the gel electrolyte solution toward the inside of the electrode plate, allow more gel electrolyte solution to enter the electrode plate, and thus form more gel electrolyte inside the electrode plate, thereby improving the cycle performance of the battery.

It can be understood that the gel electrolyte solution includes a polymerizable monomer, an initiator, an electrolyte salt, and a solvent. Optionally, the polymerizable monomer includes at least one of an ester monomer, an ether monomer, a carbonate monomer, a sulfone monomer, an isocyanate monomer, an amide monomer, a nitrile monomer, a fluorinated monomer, an ether segment-containing oligomer, and a siloxane monomer. Optionally, the initiator includes at least one of azobisisobutyronitrile, azobisisoheptonitrile, benzoyl, dicumyl peroxide, dibenzoyl peroxide, and ammonium persulfate.

In some embodiments, the temperature of the curing is 50-70 °C. Optionally, the temperature of the curing is 50 °C, 51 °C, 52 °C, 53 °C, 54 °C, 55 °C, 56 °C, 57 °C, 58 °C, 59 °C, 60 °C, 61 °C, 62 °C, 63 °C, 64 °C, 65 °C, 66 °C, 67 °C, 68 °C, 69 °C, or 70 °C.

In some embodiments, the time of the curing is 10-30 h. Optionally, the time of the curing is 10 h, 12 h, 15 h, 18 h, 20 h, 24 h, 30 h, etc.

It can be understood that the prefabricated electrode plate includes at least one of a prefabricated positive electrode plate and a prefabricated negative electrode plate. For example, when the current collector is a positive electrode current collector, a prefabricated positive electrode plate is correspondingly obtained. When the current collector is a negative electrode current collector, a prefabricated negative electrode plate is correspondingly obtained.

Another embodiment of the present application provides an electric device. The electric device includes the battery described above or a battery prepared by the preparation method described above.

Hereinafter, the secondary battery and the electric device of the present application are described with appropriate reference to the drawings.

Typically, a secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of ions.

### Positive Electrode Plate

The positive electrode plate includes a positive electrode current collector and a positive electrode film layer disposed on at least one surface of the positive electrode current collector, and the positive electrode film layer includes a positive electrode active material.

As an example, the positive electrode current collector is provided with two surfaces opposite to each other in the thickness direction thereof, and the positive electrode active material is disposed on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material on a polymer material substrate. Optionally, the metal material may include, but is not limited to, one or more of aluminum, an aluminum alloy, nickel, a nickel alloy, titanium, a titanium alloy, silver, and a silver alloy. Optionally, the polymer material substrate may include, but is not limited to, one or more of polypropylene (PP), polyethylene terephthalate (PET), polybutylene terephthalate (PBT), polystyrene (PS), and polyethylene (PE).

As an example, the positive electrode active material may include a positive electrode active material for use in batteries known in the art. As an example, the positive electrode active material may include at least one of the following materials: a lithium-containing phosphate of an olivine structure, a lithium transition metal oxide, and respective modified compounds thereof. However, the present application is not limited to these materials, and other conventional materials that may be used as positive electrode active materials for batteries may also be used. These positive electrode active materials may be used alone or in combination of two or more. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Optionally, the lithium cobalt oxide includes LiCoO₂. The lithium nickel oxide includes LiNiO₂. The lithium manganese oxide includes at least one of LiMnO₂ and LiMn₂O₄. The lithium nickel cobalt manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁). The lithium nickel cobalt aluminum oxide includes LiNi_{0.85}Co_{0.15}Al_{0.05}O₂. Examples of the lithium-containing phosphate of an olivine structure may include, but are not limited to, at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Optionally, the lithium iron phosphate includes LiFePO₄ (LFP). The lithium manganese phosphate includes LiMnPO₄. The weight ratio of the positive electrode active material in the positive electrode film layer is 80-100 wt%, based on the total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorinated acrylic resin. The weight ratio of the binder in the positive electrode film layer is 0-20 wt%, based on the total weight of the positive electrode film layer.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber. The weight ratio of the conductive agent in the positive electrode film layer is 0-20 wt%, based on the total weight of the positive electrode film layer.

In some embodiments, the positive electrode plate may be prepared by dispersing the components described above for preparing the positive electrode plate, for example, the positive electrode active material, the conductive agent, the binder, and any other components, in a solvent to form a positive electrode slurry. Optionally, the solvent includes N-methylpyrrolidone. The solid content of the positive electrode slurry is 40-80 wt%, and the viscosity at room temperature is adjusted to 5000-25,000 mPa·s. The surface of the positive electrode current collector is coated with the positive electrode slurry, and drying and cold pressing through a cold rolling mill are performed to form a positive electrode plate. The unit coating surface density of the positive electrode powder is 150-350 mg/m², and the compaction density of the positive electrode plate is 3.0-3.6 g/cm³, and optionally 3.4-3.6 g/cm³. The calculation formula of the compaction density is as follows: compaction density = coating surface density/(thickness of electrode plate after extrusion - thickness of current collector).

It can be understood that in the embodiments of the present application, the positive electrode plate may be prepared by using the positive electrode plate described above as a main body of the positive electrode plate and forming a solid electrolyte interface film on the surface of the main body of the positive electrode plate.

### Negative Electrode Plate

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material on a polymer material substrate. Optionally, the metal material includes at least one of copper, a copper alloy, nickel, a nickel alloy, titanium, a titanium alloy, silver, and a silver alloy. The polymer material includes at least one of polypropylene (PP), polyethylene terephthalate (PET), polybutylene terephthalate (PBT), polystyrene (PS), or polyethylene (PE).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that may be used as negative electrode active materials for batteries may also be used. These negative electrode active materials may be used alone or in combination of two or more. The weight ratio of the negative electrode active material in the negative electrode film layer is 70-100 wt%, based on the total weight of the negative electrode film layer.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. The weight ratio of the conductive agent in the negative electrode film layer is 0-20 wt%, based on the total weight of the negative electrode film layer.

In some embodiments, the negative electrode film layer further optionally includes other auxiliary agents, for example, a thickener, etc. The weight ratio of other auxiliary agents in the negative electrode film layer is 0-15 wt%, based on the total weight of the negative electrode film layer. Optionally, the thickener includes sodium carboxymethylcellulose (CMC-Na).

In some embodiments, the negative electrode plate may be prepared by dispersing the components described above for preparing the negative electrode plate, for example, the negative electrode active material, the conductive agent, the binder, and any other components, in a solvent to form a negative electrode slurry. Optionally, the solvent includes deionized water. The solid content of the negative electrode slurry is 30-70 wt%, and the viscosity at room temperature is adjusted to 2000-10,000 mPa·s. The negative electrode current collector is coated with the obtained negative electrode slurry, and drying and cold pressing are performed by, for example, dual rollers, to obtain a negative electrode plate. The unit coating surface density of the negative electrode powder is 75-220 mg/m², and the compaction density of the negative electrode plate is 1.2-2.0 g/m³.

It can be understood that in the embodiments of the present application, the negative electrode plate may be prepared by using the negative electrode plate described above as a main body of the negative electrode plate and forming a solid electrolyte interface film on the surface of the main body of the negative electrode plate.

### Electrolyte

The electrolyte conducts ions between the positive electrode plate and the negative electrode plate. The present application does not specifically limit the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP). The concentration of the electrolyte salt is usually 0.5-5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### Separator

In some embodiments, the secondary battery further includes a separator. The present application does not particularly limit the type of the separator, and any porous-structure separator well-known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, with no particular limitation imposed. When the separator is a multi-layer composite film, the materials of the layers may be the same or different, with no particular limitation imposed.

In some embodiments, the positive electrode plate, the negative electrode plate, and the separator may be manufactured into an electrode assembly through a winding process or a stacking process.

In some embodiments, the secondary battery may include an outer packaging. The outer packaging may be used for packaging the electrode assembly and electrolyte described above.

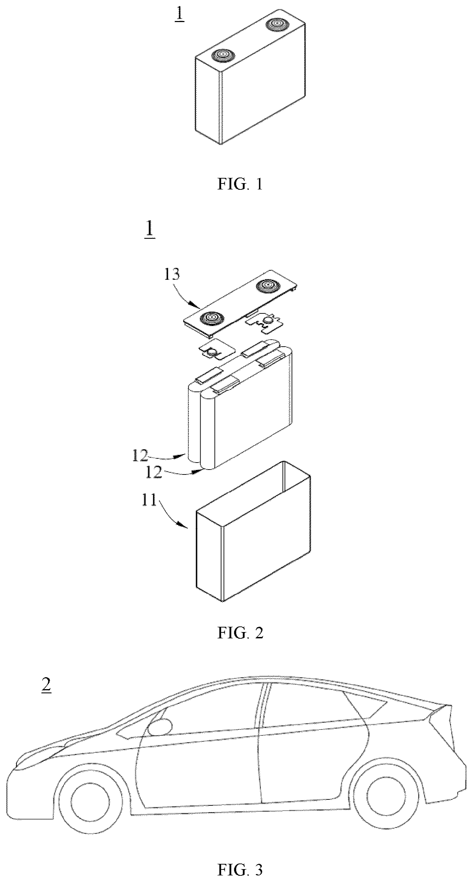

In some embodiments, the outer packaging of the secondary battery may be a hard shell, for example, a hard plastic shell, an aluminum shell, a steel shell, or the like. The outer packaging of the secondary battery may also be a soft pack, for example, a pouch-type soft pack. The soft pack may be made of plastic, and examples of the plastic may include polypropylene, polybutylene terephthalate, polybutylene succinate, and the like. The present application does not particularly limit the shape of the secondary battery, and the battery may have a cylindrical shape, a prismatic shape, or any other shape. For example, FIG. 1 shows a secondary battery 1 having a prismatic structure as one example.

In some embodiments, referring to FIG. 2, the outer packaging may include a housing 11 and a top cover assembly 13. The housing 11 may include a bottom plate and a side plate connected to the bottom plate, and the bottom plate and the side plate define, in an enclosing manner, an accommodating cavity. The housing 11 is provided with an opening in communication with the accommodating cavity, and the top cover assembly 13 is capable of lidding the opening to close the accommodating cavity. The positive electrode plate, the negative electrode plate, and the separator may be subjected to a winding process or a stacking process to form an electrode assembly 12. The electrode assembly 12 is packaged in the accommodating cavity. The electrolytic solution is infiltrated into the electrode assembly 12. The number of the electrode assembly 12 included in the secondary battery 1 may be one or more, and those skilled in the art can select the number according to specific and actual needs.

In addition, the present application further provides an electric device. The electric device includes the secondary battery according to the present application. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery may be selected according to the usage requirements of the electric device.

FIG. 3 shows an electric device 2 as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and thus a secondary battery may be used as a power source.

### Examples

In order to make the technical problems to be solved, the technical solutions, and the beneficial effects of the present application more apparent, the present application is further described in detail below with reference to the drawings and embodiments. Apparently, the described embodiments are merely some, rather than all, of the embodiments of the present application. The following description of at least one exemplary embodiment is merely illustrative in nature and is in no way intended to limit the present application and applications thereof. Based on the embodiments in the present application, all other embodiments obtained by those of ordinary skill in the art without creative efforts shall fall within the protection scope of the present application.

The examples without techniques or conditions specified therein are implemented according to techniques or conditions described in the literature in the art or according to product instructions. Reagents or instruments used herein without specified manufacturers are all commercially available conventional products.

### Example 1

### (1) Preparation of positive electrode plate

First active layer slurry: Polycarbonate diol having a weight-average molecular weight of 5000 was mixed into a slurry, and the mixture was stirred uniformly to obtain a first active layer slurry. The slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active layer slurry: The second active layer slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

A positive electrode current collector was sequentially coated with the first active layer slurry and the second active layer slurry, and drying was performed to obtain a positive electrode plate. The positive electrode plate included the positive electrode current collector, a first active layer located on the positive electrode current collector, and a second active layer located on the first active layer. The thicknesses of the first active layer and the second active layer were 200 µm and 50 µm, respectively.

### (2) Preparation of negative electrode plate

A negative electrode current collector was coated with a negative electrode slurry, and drying was performed to obtain a negative electrode plate. The negative electrode slurry contained a 50 %wt *N*-methylpyrrolidone solvent, and the mass ratio of solid components was as follows: graphite:PVDF:conductive carbon black = 8:1:1. The negative electrode plate included the negative electrode current collector and a negative electrode active layer located on the negative electrode current collector. The thickness of the negative electrode active layer was 150 µm.

### (3) Preparation of gel electrolyte solution

Ethylene glycol dicyclopentenyl ether acrylate, polyethylene glycol dimethacrylate, azobisisobutyronitrile, and an electrolytic solution were mixed uniformly at a mass ratio of 2:1:0.3:7. The electrolytic solution included an electrolyte salt and a solvent. The electrolyte salt was 1 M LiPF₆, and the solvent was a mixture of EC, EMC, and DEC at a volume ratio of 1:1:1.

### (4) Preparation of battery

The positive electrode plate, the negative electrode plate, and the separator were assembled into a battery cell, and the gel electrolyte solution was injected into the battery cell. In this case, the polycarbonate diol absorbed the gel electrolyte solution and swelled. After infiltration at 25 °C for 24 h, the gel electrolyte solution was cured at 60 °C for 24 h. After curing, a part of the gel electrolyte was filled in the pores of the polycarbonate diol.

### Examples 2-21

Compared with Example 1, Examples 2-21 differ in respect of the type of the swelling electrolyte and/or the weight-average molecular weight of the swelling electrolyte and/or the mass percentage of the swelling electrolyte in the first active layer and/or the thickness of the first active layer and/or the thickness of the second active layer, specifically as shown in Table 1.

### Example 22

### (1) Preparation of positive electrode plate

A positive electrode current collector was coated with the positive electrode slurry, and drying was performed to obtain a positive electrode plate. The positive electrode slurry contained a 50 %wt *N*-methylpyrrolidone solvent, and the mass ratio of solid components was as follows: LiCo_{0.1}Ni_{0.8}Mn_{0.1}O₂:PVDF:conductive carbon black = 9:0.5:0.5. The positive electrode plate included the positive electrode current collector and a positive electrode active layer located on the positive electrode current collector. The thickness of the positive electrode active layer was 250 µm.

### (2) Preparation of negative electrode plate

First active layer slurry: Polycarbonate diol having a molecular weight of 5000 was mixed into a slurry, and the mixture was stirred uniformly to obtain a first active layer slurry. The slurry contained a 50 %wt *N*-methyl pyrrolidone solvent, and the mass ratio of solid components was as follows: graphite:PVDF:conductive carbon black = 8:1:1.

Second active layer slurry: The second active layer slurry contained a 50 %wt *N-*methylpyrrolidone solvent, and the mass ratio of solid components was as follows: graphite:PVDF:conductive carbon black = 8:1:1.

A negative electrode current collector was sequentially coated with the first active layer slurry and the second active layer slurry, and drying was performed to obtain a negative electrode plate. The negative electrode plate included the negative electrode current collector, a first active layer located on the negative electrode current collector, and a second active layer located on the first active layer. The thicknesses of the first active layer and the second active layer were 200 µm and 50 µm, respectively.

### (3) Preparation of gel electrolyte solution

Ethylene glycol dicyclopentenyl ether acrylate, polyethylene glycol dimethacrylate, azobisisobutyronitrile, and an electrolytic solution were mixed uniformly at a mass ratio of 2:1:0.3:7. The electrolytic solution included an electrolyte salt and a solvent. The electrolyte salt was 1 M LiPF₆, and the solvent was a mixture of EC, EMC, and DEC at a volume ratio of 1:1:1.

### (4) Preparation of battery

The positive electrode plate, the negative electrode plate, and the separator were assembled into a battery cell, and the gel electrolyte solution was injected into the battery cell. After infiltration at 25 °C for 24 h, the gel electrolyte solution was cured at 60 °C for 24 h.

The test results of Example 22 are shown in Table 2.

### Example 23

### (1) Preparation of positive electrode plate

First active layer slurry: Polycarbonate diol having a molecular weight of 5000 was mixed into a slurry, and the mixture was stirred uniformly to obtain a first active layer slurry. The slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active layer slurry: The second active layer slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

A positive electrode current collector was sequentially coated with the first active layer slurry and the second active layer slurry, and drying was performed to obtain a positive electrode plate. The positive electrode plate included the positive electrode current collector, a first active layer located on the positive electrode current collector, and a second active layer located on the first active layer. The thicknesses of the first active layer and the second active layer were 200 µm and 50 µm, respectively.

### (2) Preparation of negative electrode plate

First active layer slurry: Polycarbonate diol having a molecular weight of 5000 was mixed into a slurry, and the mixture was stirred uniformly to obtain a first active layer slurry. The slurry contained a 50 %wt N-methyl pyrrolidone solvent, and the mass ratio of solid components was as follows: graphite:PVDF:conductive carbon black = 8:1:1.

Second active layer slurry: The second active layer slurry contained a 50 %wt N-methylpyrrolidone solvent, and the mass ratio of solid components was as follows: graphite:PVDF:conductive carbon black = 8:1:1.

A negative electrode current collector was sequentially coated with the first active layer slurry and the second active layer slurry, and drying was performed to obtain a negative electrode plate. The negative electrode plate included the negative electrode current collector, a first active layer located on the negative electrode current collector, and a second active layer located on the first active layer. The thicknesses of the first active layer and the second active layer were 100 µm and 50 µm, respectively.

### (3) Preparation of gel electrolyte solution

Ethylene glycol dicyclopentenyl ether acrylate, polyethylene glycol dimethacrylate, azobisisobutyronitrile, and an electrolytic solution were mixed uniformly at a mass ratio of 2:1:0.3:7. The electrolytic solution included an electrolyte salt and a solvent. The electrolyte salt was 1 M LiPF₆, and the solvent was a mixture of EC, EMC, and DEC at a volume ratio of 1:1:1.

### (4) Preparation of battery

The positive electrode plate, the negative electrode plate, and the separator were assembled into a battery cell, and the gel electrolyte solution was injected into the battery cell. After infiltration at 25 °C for 24 h, the gel electrolyte solution was cured at 60 °C for 24 h.

The test results of Example 23 are shown in Table 2.

### Example 24

Compared with Example 1, this example differs in respect of the preparation of the positive electrode plate.

The preparation method for the positive electrode plate in this embodiment was as follows:

First active sublayer slurry: Polycarbonate diol having a molecular weight of 5000 was mixed into a slurry, and the mixture was stirred uniformly to obtain a first active layer slurry. The slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active sublayer slurry: Polycarbonate diol having a molecular weight of 5000 was mixed into a slurry, and the mixture was stirred uniformly to obtain a first active layer slurry. The slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active layer slurry: The second active layer slurry contained a 50 %wt *N-*methylpyrrolidone solvent, and the mass ratio of solid components was as follows: LiCo_{0.1}Ni_{0.8}Mn_{0.1}O₂:PVDF:conductive carbon black = 9:0.5:0.5.

The positive electrode current collector is sequentially coated with the first active sublayer slurry, the second active sublayer slurry, and the second active layer slurry, and drying was performed to obtain a positive electrode plate. The positive electrode plate included the positive electrode current collector, a first active sublayer located on the positive electrode current collector, a second active sublayer located on the first active sublayer, and a second active layer located on the second active sublayer. The thicknesses of the first active sublayer, the second active sublayer, and the second active layer were 100 µm, 100 µm, and 50 µm, respectively. The mass percentages of the swelling electrolyte in the first active sublayer and the second active sublayer are shown in Table 3.

### Example 25

Compared with Example 1, this example differs in respect of the preparation of the positive electrode plate.

The preparation method for the positive electrode plate in this embodiment was as follows:

First active sublayer slurry: Polycarbonate diol having a molecular weight of 5000 was mixed into a slurry, and the mixture was stirred uniformly to obtain a first active layer slurry. The slurry contained a 50 %wt N-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active sublayer slurry: Polycarbonate diol having a molecular weight of 5000 was mixed into a slurry, and the mixture was stirred uniformly to obtain a first active layer slurry. The slurry contained a 50 %wt *N*-methylpyrrolidone solvent, and the mass ratio of solid components was as follows: LiCo_{0.1}Ni_{0.8}Mn_{0.1}O₂:PVDF:conductive carbon black = 9:0.5:0.5.

Third active sublayer slurry: Polycarbonate diol having a molecular weight of 5000 was mixed into a slurry, and the mixture was stirred uniformly to obtain a first active layer slurry. The slurry contained a 50 %wt *N*-methylpyrrolidone solvent, and the mass ratio of solid components was as follows: LiCo_{0.1}Ni_{0.8}Mn_{0.1}O₂:PVDF:conductive carbon black = 9:0.5:0.5.

Second active layer slurry: The second active layer slurry contained a 50 %wt *N-*methylpyrrolidone solvent, and the mass ratio of solid components was as follows: LiCo_{0.1}Ni_{0.8}Mn_{0.1}O₂:PVDF:conductive carbon black = 9:0.5:0.5.

The positive electrode current collector is sequentially coated with the first active sublayer slurry, the second active sublayer slurry, the third active sublayer slurry, and the second active layer slurry, and drying was performed to obtain a positive electrode plate. The positive electrode plate included a positive electrode current collector, a first active sublayer located on the positive electrode current collector, a second active sublayer located on the first active sublayer, a third active sublayer located on the second active sublayer, and a second active layer located on the third active sublayer. The thicknesses of the first active sublayer, the second active sublayer, the third active sublayer, and the second active layer were 66.67 µm, 66.67 µm, 66.67 µm, and 50 µm, respectively. The mass percentages of the swelling electrolyte in the first active sublayer, the second active sublayer, and the third active sublayer are shown in Table 3.

### Comparative Example 1

Compared with Example 1, this comparative example differs in that coating with the second active layer slurry is not performed when the positive electrode plate is prepared. The prepared positive electrode plate included the positive electrode current collector and a first active layer located on the positive electrode current collector.

### Comparative Example 2

Compared with Example 1, this comparative example differs in that when the positive electrode plate is prepared, the positive electrode slurry does not contain polycarbonate diol, the positive electrode slurry contains a 50 %wt *N*-methylpyrrolidone solvent, and the mass ratio of solid components is as follows: LiCo_{0.1}Ni_{0.8}Mn_{0.1}O₂:PVDF:conductive carbon black = 9:0.5:0.5. A positive electrode current collector was coated with the positive electrode slurry, and drying was performed to obtain a positive electrode plate. The thickness of the active layer of the positive electrode plate was 250 µm.

### Test Example

The batteries prepared in the examples and the comparative examples were subjected to a cycle performance test. The batteries were charged by using the CC-CV method, with a cutoff current for constant-voltage charging being 0.05 C, and the batteries were discharged by using the CC method, with a constant-current charging-discharging rate being 0.33 C. The voltage range was 2.5-4.35 V. The battery cycle performance was expressed in terms of capacity retention rate after 100 cycles. The results are shown in Tables 1 and 2, with units in %.

**Table 1**

| | Swelling electrolyte | | | | Thickness of first active layer (µm) | Thickness of second active layer (µm) | Capacity retention rate after 100 cycles (%) |
|---|---|---|---|---|---|---|---|
| | Type | Weight-average molecular weight | Particle size (nm) | Mass percentage (%) | | | |
| Example 1 | Polycarbonate diol | 5000 | 400 | 2 | 240 | 10 | 81 |
| Example 2 | Polycarbonate diol | 5000 | 400 | 2 | 220 | 30 | 83 |
| Example 3 | Polycarbonate diol | 5000 | 400 | 2 | 200 | 50 | 85 |
| Example 4 | Polycarbonate diol | 5000 | 400 | 2 | 190 | 60 | 85 |
| Example 5 | Polycarbonate diol | 5000 | 400 | 0.01 | 200 | 50 | 78 |
| Example 6 | Polycarbonate diol | 5000 | 400 | 1 | 200 | 50 | 80 |
| Example 7 | Polycarbonate diol | 5000 | 400 | 3 | 200 | 50 | 87 |
| Example 8 | Polycarbonate diol | 5000 | 400 | 5 | 200 | 50 | 84 |
| Example 9 | Polycarbonate diol | 5000 | 400 | 6 | 200 | 50 | 80 |
| Example 10 | Polycarbonate diol | 1500 | 100 | 2 | 200 | 50 | 81 |
| Example 11 | Polycarbonate diol | 3000 | 210 | 2 | 200 | 50 | 86 |
| Example 12 | Polycarbonate diol | 7000 | 550 | 2 | 200 | 50 | 84 |
| Example 13 | Polycarbonate diol | 8000 | 850 | 2 | 200 | 50 | 82 |
| Example 14 | Polycarbonate diol | 10000 | 1000 | 2 | 200 | 50 | 79 |
| Example 15 | Polyvinyl acetate | 5000 | 400 | 2 | 200 | 50 | 90 |
| Example 16 | Polyethylene glycol polyacrylate | 5000 | 400 | 2 | 200 | 50 | 91 |
| Example 17 | Polypropylene oxide | 5000 | 400 | 2 | 200 | 50 | 87 |
| Example 18 | Poly(propylene sulfate) | 5000 | 400 | 2 | 200 | 50 | 84 |
| Example 19 | Polysiloxane | 5000 | 400 | 2 | 200 | 50 | 83 |
| Example 20 | Polymethyl methacrylatemaleic anhydride copolymer | 5000 | 400 | 2 | 200 | 50 | 88 |
| Example 21 | Polypropylene carbonate | 5000 | 400 | 2 | 200 | 50 | 86 |
| Comparative Example 1 | Polycarbonate diol | 5000 | 400 | 2 | 200 | 0 | 75 |
| Comparative Example 2 | / | / | / | / | | / | 73 |

**Table 2**

| | Swelling electrolyte | | | | Capacity retention rate after 100 cycles (%) |
|---|---|---|---|---|---|
| | Type | Molecular weight | Particle size (nm) | Mass percentage in corresponding active layer (%) | |
| Example 22 | Polycarbonate diol | 5000 | 400 | 2 | 81 |
| Example 23 | Polycarbonate diol | 5000 | 400 | 2 | 93 |

It can be understood that the mass percentage of 2% in the corresponding active layer of Example 22 in Table 2 indicates that in the negative electrode plate, the mass percentage of the swelling electrolyte in the first active layer of the negative electrode is 2%. The mass percentage of 2% in the corresponding active layer of Example 23 in Table 2 indicates that in the positive electrode plate, the mass percentage of the swelling electrolyte in the first active layer of the negative electrode is 2%, and in the negative electrode plate, the mass percentage of the swelling electrolyte in the first active layer of the negative electrode is also 2%.

**Table 3**

| | Swelling electrolyte | | | Mass percentage of swelling electrolyte (%) | | | Thickness of first active layer (µm) | Thickness of second active layer (µm) | Capacity retention rate after 100 cycles (%) |
|---|---|---|---|---|---|---|---|---|---|
| | Type | Molecular weight | Particle size (nm) | First active sublayer | Second active sublayer | Third active sublayer | | | |
| Example 24 | Polycarbonate diol | 5000 | 400 | 5 | 3 | 0 | 200 | 50 | 89 |
| Example 25 | Polycarbonate diol | 5000 | 400 | 5 | 3 | 1 | 200 | 50 | 95 |

As can be seen from Tables 1-3, the cycle performance of the gel battery can be improved by introducing a swelling electrolyte into the first active layer. Further, the first active layer is divided into a plurality of active sublayers, and the cycle performance of the battery is better when the mass percentage of the swelling electrolyte in adjacent active sublayer gradually decreases in the direction away from the current collector.

The technical features of the examples described above may be combined in any manner. For brevity, not all possible combinations of the technical features in the above examples are described. However, as long as no contradiction exists in the combinations of the technical features, such combinations should be considered to be within the scope of the specification.

The examples described above only represent several embodiments of the present application. Although the descriptions of these examples are relatively specific and detailed, they should not be construed as limiting the patent scope of the present disclosure. It should be noted that various changes and modifications can be made by those skilled in the art without departing from the concept of the present application, and these changes and modifications all shall fall within the protection scope of the present application. Therefore, the scope of protection of the patent in the present application shall be subjected to the appended claims.

## Claims

1. A battery, comprising an electrode plate, wherein the electrode plate comprises a current collector, a first active layer, and a second active layer, wherein the first active layer is located on at least one surface of the current collector, the second active layer is located on a surface of the first active layer distal to the current collector, and the first active layer and the second active layer both comprise an active substance and a gel electrolyte; the first active layer further comprises a swelling electrolyte having pores, and a part of the gel electrolyte in the first active layer is filled in the pores of the swelling electrolyte.

2. The battery according to claim 1, wherein the swelling electrolyte satisfies at least one of the following features (1)-(2):
(1) morphology of the swelling electrolyte is at least one of spherical and spheroidal;
(2) an average particle size of the swelling electrolyte is 210-850 nm;
optionally, an average particle size of the swelling electrolyte is 300-500 nm.

3. The battery according to any one of claims 1-2, wherein a weight-average molecular weight of the swelling electrolyte is 2000-10,000;
optionally, a weight-average molecular weight of the swelling electrolyte is 3000-8000.

4. The battery according to any one of claims 1-3, wherein the swelling electrolyte comprises at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

5. The battery according to any one of claims 1-4, wherein a mass percentage of the swelling electrolyte in the first active layer is 0.01%-5%;
optionally, a mass percentage of the swelling electrolyte in the first active layer is 1%-4%.

6. The battery according to any one of claims 1-5, wherein the gel electrolyte is of a mesh structure inside the electrode plate.

7. The battery according to any one of claims 1-6, wherein the first active layer comprises a plurality of active sublayers arranged in a stacked manner, wherein each of the active sublayers comprises the active substance, the gel electrolyte, and the swelling electrolyte, the swelling electrolyte in each of the active sublayers is uniformly distributed, and the mass percentage of the swelling electrolyte in the adjacent active sublayer gradually decreases in a direction away from the current collector.

8. The battery according to claim 7, wherein the active sublayer satisfies at least one of the following features (1)-(5):
(1) the mass percentage of the swelling electrolyte in the adjacent active sublayer decreases by 0.01%-1% in the direction away from the current collector;
(2) the mass percentage of the swelling electrolyte in the active sublayer most proximal to the current collector is 3%-5%;
(3) the mass percentage of the swelling electrolyte in the active sublayer most distal to the current collector is 0.01%-3%;
(4) a thickness of each of the active sublayers is 20-120 µm;
(5) the gel electrolytes in the active sublayers are of an integrated structure.

9. The battery according to any one of claims 1-8, wherein the second active layer satisfies at least one of the following features (1)-(3):
(1) a mass percentage of a swelling electrolyte in the second active layer is ≤ 0.5%;
optionally, a mass percentage of a swelling electrolyte in the second active layer is ≤ 0.05%;
optionally, a mass percentage of a swelling electrolyte in the second active layer is 0;
(2) a thickness of the second active layer is ≥ 10 µm;
optionally, a thickness of the second active layer is 10-180 µm;
(3) the gel electrolyte in the second active layer and the gel electrolyte in the first active layer are of an integrated structure.

10. The battery according to claims 1-9, wherein a thickness of the first active layer is 70-240 µm.

11. The battery according to any one of claims 1 to 10, further comprising a gel electrolyte layer, wherein the gel electrolyte layer is located on a surface of at least one of a positive electrode plate, a negative electrode plate, and a separator of the battery, and when the positive electrode plate and/or the negative electrode plate is provided with the first active layer and the second active layer, the gel electrolyte layer is located at least on a surface of the second active layer;
optionally, a thickness of the gel electrolyte layer is 0.5-4 µm.

12. The battery according to any one of claims 1-11, wherein the electrode plate comprises at least one of the positive electrode plate and the negative electrode plate.

13. A preparation method for a battery, comprising the following steps:
forming a first prefabricated active layer on at least one surface of a current collector, wherein the first prefabricated active layer comprises a swelling electrolyte raw material and an active substance, and forming a second prefabricated active layer on the first prefabricated active layer, wherein the second prefabricated active layer comprises the active substance, such that a prefabricated electrode plate is prepared;
assembling battery assemblies comprising the prefabricated electrode plate into a battery cell;
injecting a gel electrolyte solution into the battery cell, such that the gel electrolyte solution infiltrates the active substances, and the swelling electrolyte raw material absorbs the gel electrolyte solution and swells; and
curing the gel electrolyte solution to form a swelling electrolyte having pores, wherein the pores of the swelling electrolyte are filled with a gel electrolyte.

14. The preparation method according to claim 13, wherein the swelling electrolyte raw material satisfies at least one of the following features (1)-(4):
(1) morphology of the swelling electrolyte raw material is at least one of spherical and spheroidal;
(2) a particle size of the swelling electrolyte raw material is smaller than a particle size of the swelling electrolyte;
optionally, an average particle size of the swelling electrolyte raw material is 200-800 nm;
optionally, an average particle size of the swelling electrolyte raw material is 300-500 nm;
(3) a weight-average molecular weight of the swelling electrolyte raw material is 2000-10,000;
optionally, a weight-average molecular weight of the swelling electrolyte raw material is 3000-8000;
(4) the swelling electrolyte raw material comprises at least one of a polyacrylate electrolyte, a polyether electrolyte, a polycarbonate electrolyte, a polycarboxylate electrolyte, a silicon-based electrolyte, a polythiol electrolyte, a maleic anhydride electrolyte, and a polysulfate electrolyte.

15. The preparation method according to claim 13 or 14, wherein said forming the first prefabricated active layer on at least one surface of the current collector, comprises:
sequentially forming a plurality of prefabricated active sublayers arranged in a stacked manner on at least one surface of the current collector, wherein each of the prefabricated active sublayers comprises the active substance and the swelling electrolyte raw material, and controlling a mass percentage of the swelling electrolyte raw material in each of the prefabricated active sublayers to gradually decrease in a direction away from the current collector.

16. The preparation method according to claim 15, wherein said controlling the mass percentage of the swelling electrolyte raw material in each of the prefabricated active sublayers to gradually decrease in the direction away from the current collector, satisfies at least one of the following features (1)-(4):
(1) controlling the mass percentage of the swelling electrolyte raw material in the adjacent prefabricated active sublayer to decrease by 0.01%-1% in the direction away from the current collector;
(2) controlling the mass percentage of the swelling electrolyte raw material in the prefabricated active sublayer most proximal to the current collector to be 3%-5%;
(3) controlling the mass percentage of the swelling electrolyte raw material in the prefabricated active sublayer most distal to the current collector to be 0.01%-3%; and
(4) controlling a thickness of each of the prefabricated active sublayers to be 20-120 µm.

17. The preparation method according to any one of claims 13-16, wherein a mass percentage of a swelling electrolyte raw material in the second prefabricated active layer is ≤ 0.5%;
optionally, a mass percentage of a swelling electrolyte raw material in the second prefabricated active layer is ≤ 0.05%;
optionally, a mass percentage of a swelling electrolyte raw material in the second prefabricated active layer is 0.

18. The preparation method according to any one of claims 13-16, wherein the gel electrolyte solution comprises a polymerizable monomer, an initiator, an electrolyte salt, and a solvent.

19. The preparation method according to any one of claims 13-18, wherein a temperature of the curing is 50-70 °C; and/or a time of the curing time is 10-30 h.

20. An electric device, comprising the battery according to any one of claims 1-12 or a battery prepared by the preparation method for a battery according to any one of claims 13-19.
